# FASCICULE DE BREVET EUROPEEN

(11) **EP 2 956 835 B1**
(45) Date de publication et mention de la délivrance du brevet: **15.01.2020**
(21) Numéro de dépôt: 13829064.8
(22) Date de dépôt: 20.12.2013
(51) Int. Cl.: G06F 1/16, B60K 35/00, B60K 37/06

(54) **MODULE D'AFFICHAGE ET DISPOSITIF D'AFFICHAGE COMPORTANT UN TEL MODULE**
ANZEIGEMODUL UND ANZEIGEVORRICHTUNG MIT SOLCH EINEM MODUL
DISPLAY MODULE AND DISPLAY DEVICE COMPRISING SUCH A MODULE

(30) Priorité: 27.12.2012 FR 1262856
(43) Date de publication de la demande: 23.12.2015
(73) Titulaire: Valeo Systemes Thermiques, 78320 Le Mesnil Saint Denis (FR)
(72) Inventeur: LEKMINE, Djamel, F-78320 Le Mesnil Saint Denis (FR)
(74) Mandataire: Pothmann, Karsten
(86) Numéro de dépôt international: PCT/FR2013/000368
(87) Numéro de publication internationale: WO 2014/102470

(56) Documents cités:
- EP-A1- 2 249 226
- EP-A1- 2 434 367
- WO-A1-2012/131188
- US-A1- 2012 257 341
- US-B2- 8 213 168

## Description

La présente invention concerne un module d'affichage et un dispositif d'affichage comportant un tel module, notamment pour véhicule automobile.

Un tel module et un tel dispositif trouvent une application avantageuse dans les tableaux de commande et d'affichage de véhicule automobile.

La présence de dispositifs d'affichage dans des véhicules automobiles, notamment comprenant des écrans plats est de plus en plus répandus.

Ces dispositifs d'affichage peuvent d'ailleurs comporter seulement l'écran plat ou encore, associée à cet écran plat, une dalle tactile de commande par exemple capacitive ou résistive. Dans ce dernier cas, la dalle tactile permet de déterminer les coordonnées de l'appui d'un doigt d'utilisateur. Les appuis sont ensuite traités par une unité de traitement comportant par exemple un microprocesseur pour commander différentes fonctions du véhicule, comme par exemple des fonctions de climatisation, d'un système audio, d'un système de téléphonie, d'un système multimédia ou encore d'un système de navigation.

On connaît des dispositifs d'affichage intégrés au tableau de commande et d'affichage dans lesquels un cadre est disposé tout autour du dispositif d'affichage, cachant les bords de l'écran plat et, le cas échéant la dalle tactile, en formant une bordure en relief, généralement en retrait, délimitant une cavité entre le dispositif d'affichage et le cadre. L'écran d'affichage apparaît alors en retrait de la bordure du cadre.

Pour des raisons de style, il est de plus en plus demandé à ce que la surface du dispositif d'affichage en vis-à-vis d'un utilisateur affleure la surface de la façade du tableau de commande et d'affichage. On parle également d'un afficheur « flushy », mot anglais pour désigner que la surface du dispositif d'affichage est en alignement avec la façade. Ainsi, lorsque l'on passe un doigt sur le dispositif d'affichage puis sur la façade, la différence de niveau entre la surface de la façade et celle du dispositif d'affichage doit être telle que l'on ne sent pas ou à peine le changement de surface (bien entendu sous condition que les deux surfaces présentent une rugosité semblable). Cette différence de niveau a été quantifiée à 0,2, voire 0,15mm.

Ce souhait de style pose un certain nombre de problèmes techniques en particulier au niveau des jeux des divers éléments assemblés ensemble.

En effet, lorsque le dispositif d'affichage est placé dans une ouverture de façade, il faut assurer à la fois une étanchéité avec la façade du tableau de commande et d'affichage et préserver l'effet « flushy ».

Or, à ce jour, cette étanchéité est classiquement assurée par un joint en silicone déposé sous forme liquide lors du posage du dispositif d'affichage.

Cependant, un tel joint en silicone est peu esthétique, en particulier parce que le dispositif d'affichage n'est pas parfaitement centré, de sorte que l'épaisseur visible du joint varie.

De plus, comme une partie du joint de silicone est à l'air, il a une tendance à bomber ce qui nuit, voire détruit l'effet « flushy ».

US 2012/0257341 A1, US 8,213,168 B2, EP 2 434 367 A1 et EP 2 249 226 A1 divulguent des dispositifs d'affichage comprenant des modules d'affichage fixés à des façades utilisant des joints de centrage.

La présente invention vise à pallier au moins partiellement certains des problèmes ci-dessus.

A cet effet, la présente invention a pour objet un tableau de commande et d'affichage comprenant
- une façade comportant une ouverture
- un boîtier de fixation
- un module d'affichage comprenant:
   - un écran plat, et
   - un cadre de support dudit écran plat, et
- un sous-module :
   - présentant une plaque de comblement en matériau transparent présentant sensiblement les dimensions de l'ouverture de la façade recevant le module d'affichage en laissant un interstice entre la plaque de comblement et le bord de l'ouverture de la façade,
   - comprenant un joint de centrage réalisé en un matériau élastomère thermoplastique polyester pour combler l'interstice entre la plaque de comblement et le bord de l'ouverture de la façade,
   - comprenant une dalle tactile collée contre la face de la plaque de comblement opposée à celle destinée à être en vis-à-vis d'un utilisateur,
   le sous-module étant fixé par collage contre un bord périphérique du cadre de support, le bord périphérique étant disposé face à une butée de référence d'une face interne de la façade, et
   l'épaisseur de la plaque de comblement étant choisie de manière qu'elle affleure la face de la façade destinée à être vue par un utilisateur avec un jeu inférieur à 0,2 mm,
   le boîtier de fixation étant configuré de manière à fixer par l'arrière le module d'affichage contre la butée de référence de la face interne de la façade.

Le type de matériau élastomère thermoplastique polyester présente l'avantage de la souplesse des caoutchoucs, la résistance des plastiques et facilité de mise en œuvre des thermoplastiques. Grâce à sa stabilité de forme, ce joint peut être réalisé au préalable avec une bonne précision dimensionnelle de sorte que non seulement un effet « flushy » peut être obtenue facilement, mais aussi qu'un centrage du module peut être réalisé grâce à ce joint.

La mise en place est en outre plus facile qu'un joint en silicone par exemple.

Selon un aspect le joint de centrage présente en coupe transversale un profil en L dont une branche est en contact contre le bord de la plaque de comblement et dont l'autre branche est interposée entre la butée de référence de la façade et le sous-module ce qui permet d'assurer une très bonne étanchéité.

Selon un autre aspect le joint de centrage est rectifié, c'est-à-dire que ses dimensions ont été ajustées avec précision, augmentant ainsi encore la précision de positionnement du dispositif d'affichage.

Du fait que le sous-module est collé sur le cadre de support de l'écran plat, on obtient un empilement bien aligné

De plus, le sous-module comprend une dalle tactile collée contre la face de la plaque de comblement opposée à celle destinée à être en vis-à-vis d'un utilisateur, ce qui permet d'obtenir une fonction supplémentaire, une fonction de commande et une meilleure correspondance entre les affichages de l'écran plat représentant des champs de commande d'une part et les zones de commandes de la dalle tactile d'autre part.

Les fixations par collage entre le sous-module et le bord périphérique du cadre de support sont réalisées par un adhésif double face et les fixations par collage entre la dalle tactile et la plaque de comblement sont réalisées par un adhésif double face ou par une colle optique, ce qui permet de bien maîtriser l'épaisseur entre la plaque de comblement et la dalle tactile d'une part et entre la dalle tactile et l'écran plat d'autre part.

Dans le cas où la plaque de comblement est fixée, par exemple sur toute sa surface, contre la dalle tactile par une colle transparente, comme de la colle optique, il n'y a même plus de lame d'air entre la plaque de comblement et la dalle tactile. A titre d'exemple la plaque de comblement possède une épaisseur comprise entre 1,6 et 2mm et peut être est en verre ou en polycarbonate cristal avec une teinte cristal ou fumé selon les aspects recherchés par rapport à la façade.

La dalle tactile possède par exemple une épaisseur comprise entre 1,0 et 1,4 mm, de préférence 1,2mm.

Le sous-module est ainsi peu encombrant.

Pour augmenter la qualité optique d'affichage, le sous-module peut en outre comprendre un film polariseur collé sur la face de la plaque de comblement destinée à être en vis-à-vis d'un utilisateur.

D'autres caractéristiques et avantages de l'invention ressortiront de la description suivante, donnée à titre d'exemple, sans caractère limitatif, en regard des dessins annexés sur lesquels :
- la figure 1 montre une vue en perspective éclatée depuis l'arrière d'un dispositif d'affichage selon l'invention,
- la figure 2 montre une vue agrandie en coupe transversale au niveau d'un élément de liaison,
- la figure 3 montre une vue en coupe d'une partie d'un élément de liaison selon l'invention,
- la figure 4 montre une vue en perspective éclatée depuis l'avant d'un module d'affichage d'un dispositif d'affichage selon l'invention,
- la figure 5 montre une vue en coupe transversale d'un détail du module d'affichage,
- la figure 6 montre le module d'affichage avec un anneau de centrage,
- la figure 7 montre selon une vue en coupe transversale le dispositif d'affichage selon l'invention équipé d'un anneau de centrage.
- les figures 8A et 8B montrent des vues en coupe transversale de deux étapes d'un procédé d'assemblage d'un dispositif d'affichage selon l'invention selon un premier mode de réalisation,
- les figures 9A et 9B montrent des vues en coupe transversale de deux étapes d'un procédé d'assemblage d'un dispositif d'affichage selon l'invention selon un second mode de réalisation, et
- la figure 10 montre une vue en coupe transversale d'un autre exemple de réalisation d'un élément de liaison.

Sur ces figures, les éléments identiques portent les mêmes numéros de référence.

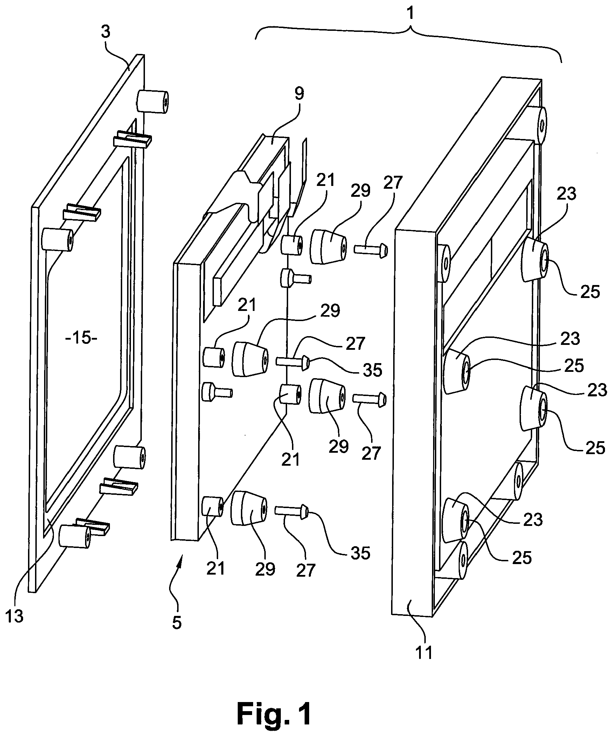

Sur la figure 1 est représentée une vue en perspective éclatée depuis l'arrière d'un dispositif d'affichage 1 selon l'invention. Ce dispositif d'affichage trouve une utilisation particulièrement avantageuse dans un habitacle de véhicule automobile, en particulier pour être intégré dans un tableau de commande et d'affichage, dont seul un élément de façade 3 est représenté.

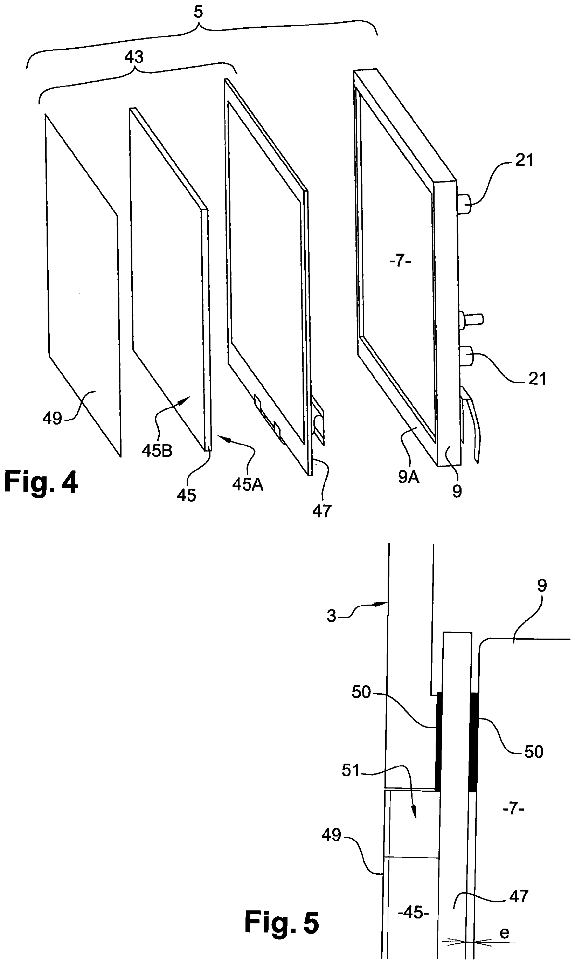

Plus particulièrement, le dispositif d'affichage 1 comprend un module d'affichage 5 comportant d'une part un écran plat 7, par exemple un écran TFT, un écran LCD, LED ou OLED (voir figure 4) et un cadre de support 9 dudit écran plat.

D'autre part, le dispositif d'affichage 1 comprend un boîtier 11 de fixation par l'arrière du module d'affichage 5 contre une butée de référence 13 de la façade 3 au niveau d'une zone d'affichage 15. La butée de référence peut par exemple être la face interne de la façade 3. La zone d'affichage peut être matérialisée par une ouverture de façade ou une fenêtre pleine insérée dans la façade 3.

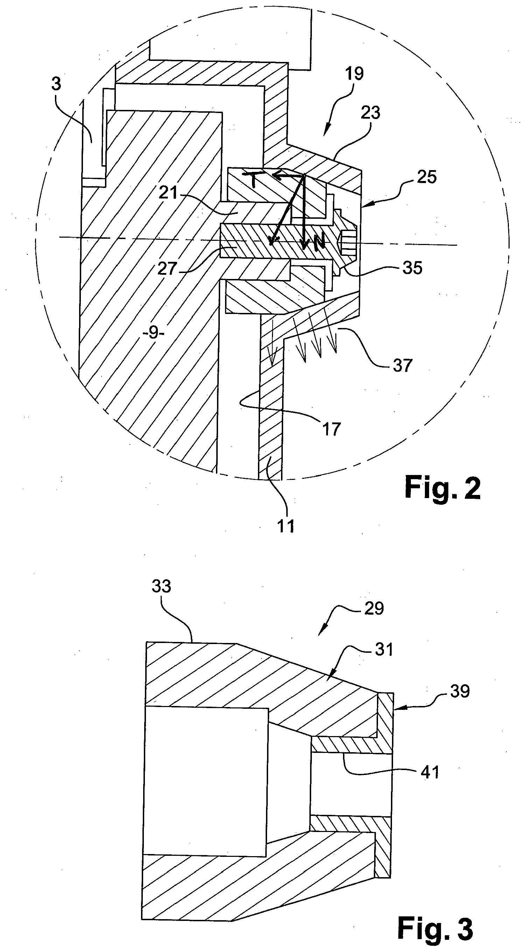

Le cadre de support 9 de l'écran plat 7 est fixé sur le fond 17 (voir figure 2) du boîtier de fixation 11 par l'intermédiaire d'éléments de liaison 19. Ces éléments de liaison 19 sont chacun en appui d'une part contre le boitier de fixation 11 et d'autre part contre le cadre de support 9.

Selon le présent mode de réalisation, ces éléments de liaison sont réalisés sous forme d'éléments élastiques comprimés 19 pour maintenir le module d'affichage 5 en appui contre la butée de référence 13 de la façade 3.

Ainsi, comme les écrans plats 7 présentent toujours à l'arrière des pieds de fixation 21, on peut compenser tout jeu de fabrication afin que l'écran plat 7 soit au plus près de la zone d'affichage 15, qui est ici une ouverture, et de la façade 3, ce qui n'était pas possible selon l'art antérieur étant donné que l'écran était simplement vissé à l'arrière du fond de boîtier ce qui rendait tout rattrapage de jeu par l'arrière impossible.

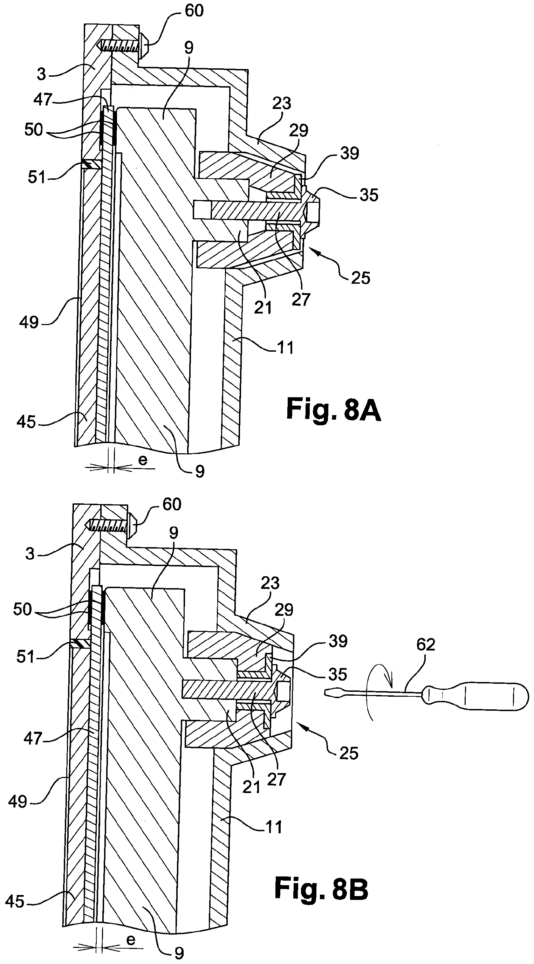

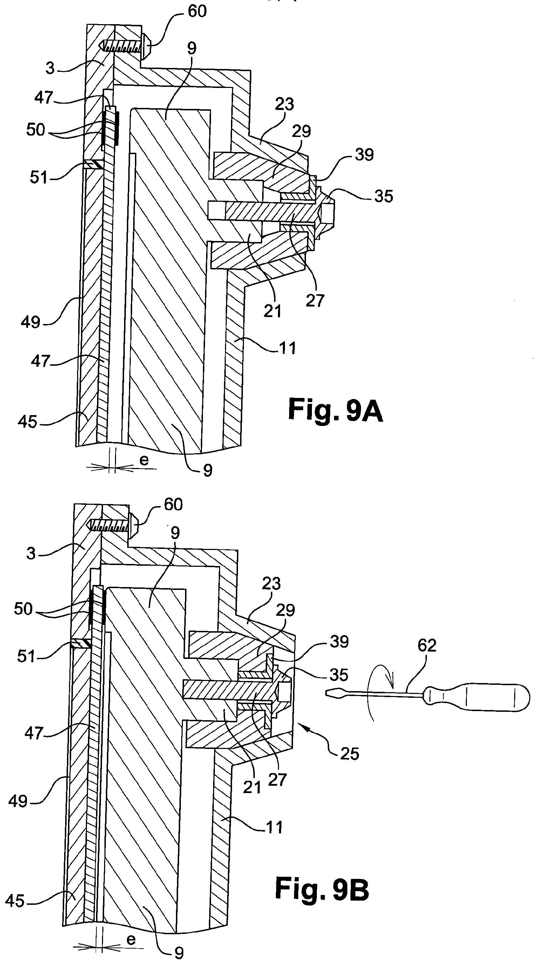

Plus en détail, le boitier de fixation 11 comprend pour chaque élément de liaison 19 un renfoncement tronconique 23 bien visible sur les figures 1 à 3, avec une ouverture 25 à l'arrière pour un passage d'une vis 27 ou d'un outil de vissage (par exemple un tournevis 62 - voir figures 8B et 9B).

Chaque élément de liaison 19 comprend un manchon en élastomère 29 présentant une partie tronconique 31 (voir aussi figure 3) en appui contre le renfoncement tronconique 23 (voir figure 2) et une partie cylindrique 33 entourant un pied de fixation 21.

Comme on le voit sur les figures 1 et 2, la vis 27 qui présente une tête de vissage 35, est en prise avec un pied de fixation 21.

Comme cela est visible sur la figure 2, la tête de vis 35 appui contre la partie tronconique 31 du manchon en élastomère 29 pour exercer une force de compression sur ce manchon en élastomère 29 de sorte que la partie cylindrique 33 du manchon en élastomère 29 exerce une poussée contre le cadre de support 11 tout en maintenant la partie tronconique 31 du manchon 29 en appui par frottement contre les parois des renfoncements tronconiques 23 (voir flèches 37 de la figure 2) maintenant ainsi le module d'affichage 5 en appui contre la façade 3.

On comprend donc que lorsque l'on visse la vis 27, on comprime le manchon en élastomère 29, ce qui a pour conséquence une extension radiale. Toutefois, cette extension radiale est contrée par les parois tronconiques des renfoncements 23 qui transforment cette extension radiale en mouvement de translation de la partie cylindrique 33 en direction du cadre de support 9, ce qui permet un rattrapage de jeu par l'arrière simple et efficace.

En outre, une rondelle 39 est interposée entre la tête de vis 35 et la partie tronconique 31 du manchon en élastomère 29. Cette rondelle 39 est prolongée par une portion cylindrique 41 qui rentre dans la partie tronconique 31 du manchon 29 et forme une butée de vissage ou limiteur de course pour la vis 27 (fig. 3). De la sorte, on peut lors du montage automatique utiliser une visseuse électrique sans risquer d'abimer les divers éléments. En particulier, la longueur de la partie cylindrique 41 de la rondelle 39 permet de calibrer la force d'appui ou force de poussée contre le cadre de support 5. Le module d'affichage 5 peut être immobilisé sans hyper-statisme et sans création de contraintes supplémentaires. En choisissant la dureté / élasticité de l'élastomère du manchon 29, on peut moduler en fonction des besoins la relation entre le chemin parcouru par la vis pendant le vissage d'une part et l'avancé de la partie cylindrique 41 du manchon en élastomère 29 provoquée par le vissage.

Comme on le voit sur la figure 2, chaque pied de fixation 21 pénètre partiellement dans le renfoncement tronconique 25, ce qui assure un centrage automatique du module d'affichage 5 et une meilleure tenue.

On se tourne maintenant plus en détail vers le module d'affichage 5.

En effet, comme on le voit sur la figure 4, outre l'écran 7 et le cadre de support 9, il peut comprendre un sous-module 43 présentant une plaque de comblement 45.

Cette plaque de comblement 45 est réalisée en matériau transparent, comme par exemple en verre ou en polycarbonate, par exemple teinté, fumé ou cristal, et présente sensiblement les dimensions de l'ouverture 15 ménagée dans la façade 3 en laissant un interstice entre le bord de l'ouverture 15 et le bord de la plaque de comblement 45.

De plus, le sous-module 43 comprend une dalle tactile 47 collée contre la face 45A de la plaque de comblement 45 opposée à celle destinée à être en vis-à-vis d'un utilisateur.

Enfin, un film polariseur 49 est collé sur la face 45B de la plaque de comblement 45 destinée à être en vis-à-vis d'un utilisateur.

Le sous-module 43 est fixé par collage, par exemple un adhésif double face, contre le bord périphérique 9A du cadre de support 9 destiné à être poussé en direction de la butée de référence 13 de la façade 3. Ainsi, on peut obtenir une précision de placement entre la dalle tactile 47 d'une part et l'écran plat 7 d'autre part inférieure ou égale à 0,3mm. On peut ainsi obtenir une bonne correspondance entre les informations de commandes affichées par l'écran plat 7 d'une part et les champs de commandes de la dalle tactile 47 d'autre part. Cette excellente précision ne pouvait pas être obtenue dans l'état de la technique dû aux tolérances de fabrication et du fait que la dalle tactile était supportée par la façade et l'écran plat par le fond du boîtier. De plus, le collage du sous-module 43 sur le bord périphérique 9A du cadre de support 9 crée un module d'affichage 9 facile à monter dans un tableau de commande et d'affichage.

L'épaisseur de la plaque de comblement 45 est choisie de manière que la plaque de comblement avec le film polariseur 49 affleure la face de façade 3 destinée à être vue par un utilisateur avec un jeu inférieur à 0,2 mm, typiquement de 0,15mm (voir figure 5).

A titre d'exemple, la plaque de comblement 45 possède une épaisseur comprise entre 1,6 et 2mm et la dalle tactile possède une épaisseur comprise entre 1,0 et 1,4 mm, de préférence 1,2mm.

Bien entendu, des variantes plus simples sont envisageables, par exemple avec un sous-module 43 formé seulement de la plaque de comblement 45 pour un afficheur simple, avec ou sans film polariseur 49.

Pour assembler le sous-module 43, on colle par l'intermédiaire de l'adhésif double face 50 ou d'une colle optique la dalle tactile 47 sur la plaque de comblement 45 pour former un sous-module 43, et on colle par l'intermédiaire de l'adhésif double face 50 le sous-module 43 sur le cadre de support 9 de l'écran plat 7.

Lors de la formation du sous-module 43, en fonction des besoins, on peut prévoir de coller le film polariseur 49 sur la face 45B de la plaque de comblement (45) destinée à être en vis-à-vis d'un utilisateur.

Pour faciliter le montage et pour combler l'interstice entre le bord de l'ouverture de façade 15 et le bord de la plaque de comblement 45, le module d'affichage 5 comprend en outre un joint de centrage 51 réalisé en un matériau élastomère thermoplastique polyester, par exemple celui commercialisé sous la marque HYTREL®.

Ce type de matériau présente l'avantage de la souplesse des caoutchoucs, la résistance des plastiques et la facilité de mise en œuvre des thermoplastiques. Il existe avec une gamme très large de duretés SHORE (30D à 82D) tout en conservant ses propriétés dans une large gamme de températures comprise entre -40°C à +110°C.

Selon la figure 5, ce joint de centrage 51 est un simple anneau de section transversale sensiblement carrée.

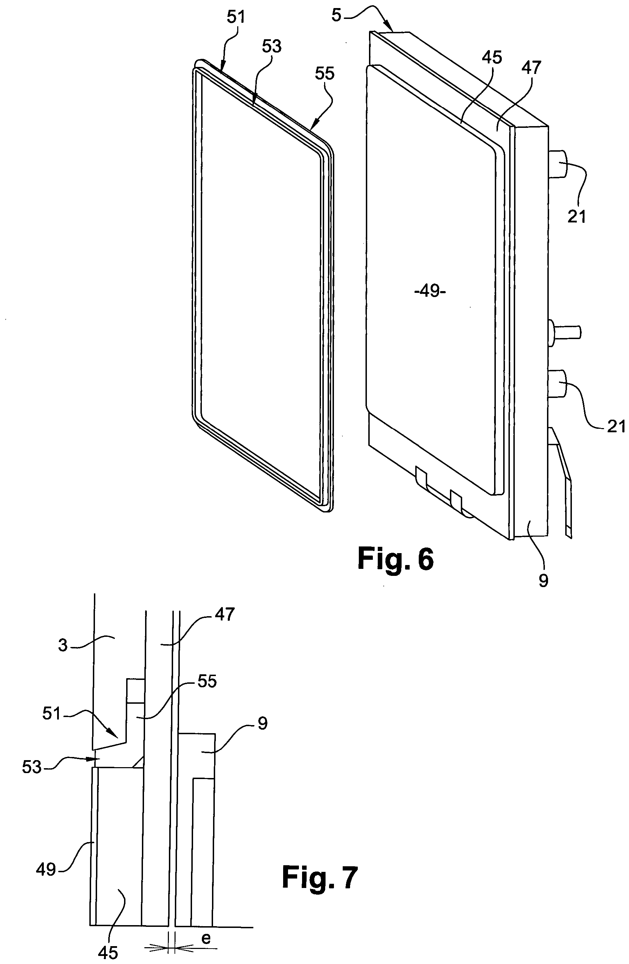

En alternative, ce joint de centrage 51 présente dans le mode de réalisation des figures 6 et 7 en coupe transversale un profil en L dont une branche 53 est en contact contre le bord de la plaque de comblement 45 et dont l'autre branche 55 est interposée entre la butée de référence 13 de la façade 3 et le sous-module 43. Le joint de centrage 51 peut être monté d'abord dans l'ouverture 15 de la façade 3 ou sur le sous-module 43.

Grâce à ses propriétés de matériau, le joint de centrage 51 qui possède une forme d'anneau peut être rectifié, ce qui lui procure des dimensions très précises et permet un placement très précis du sous-module 43 par rapport à l'ouverture 15.

De plus ce joint de centrage 51 permet une protection contre les décharges électrostatiques.

Comme on peut le constater sur les figures 5 et 7, l'épaisseur « e » de la lame d'air entre le sous-module 43 et l'écran d'affichage 7, c'est-à-dire l'interstice entre la dalle tactile 47 et l'écran d'affichage 7, peut être maitrisé avec précision, car on peut rattraper la dispersion des dimensions mécaniques des pièces et des tolérances de fabrication, en particulier du boîtier de fixation généralement réalisé en matière plastique.

Ainsi, dans le cadre d'un écran plat 7 simple avec une plaque de comblement 45, cela permet de minimiser des effets de réfraction qui pourraient altérer la qualité d'image, notamment lors de l'observation de l'écran 7 en oblique. Quand on pense que les écrans 7 sont généralement intégrés au niveau central d'un tableau de commande et d'affichage, on comprend qu'il s'agit d'un problème important qui est maintenant maîtrisé.

On comprend que le dispositif d'affichage 1 selon l'invention peut être intégré de façon à former pratiquement qu'une seule surface lisse pour l'utilisateur.

Bien entendu, d'autres modes de réalisations sont envisageables sans sortir du cadre de la présente invention.

En effet, les éléments de liaison 19 peuvent être utilisés avec un module d'affichage 5 plus simple, par exemple sans dalle tactile et/ou sans plaque de comblement et/ou sans film polariseur.

De même, le module d'affichage 5 avec un écran plat 7 sur lequel est collé le sous-module 43 présentant une plaque de comblement 45, une dalle tactile 47 avec ou sans film polariseur 49 peut trouver d'autres applications que les tableaux de commande et d'affichage de véhicules automobile et être fixé par d'autres moyens de fixation que les éléments de liaison 19 décrits ci-dessus. Il se distingue déjà en tant que tel par sa facilité d'assemblage.

Aussi le joint de centrage peut être utilisé avec d'autres éléments de liaison 19 que ceux décrits ci-dessus.

On va maintenant décrire plus en détail le procédé d'assemblage d'un dispositif d'affichage tel que décrit ci-dessus.

Sur la figure 8A est représentée une vue en coupe transversale semblable à celle de la figure 5.

Auparavant, le module d'affichage 5 avec son sous-module 43 et son écran d'affichage 7 avec le cadre de support 9 ont été assemblés et collés par un adhésif double face 50 contre la butée de référence 13 qui est ici la face interne de la façade 3.

De plus, les pieds de fixation 21 ont chacun été équipés d'un manchon élastique 29 maintenu en place par la vis de fixation 27 comme décrit ci-dessus.

Puis, on coiffe le module d'affichage 5 depuis l'arrière par le boîtier de fixation 11 et on fixe ce boîtier 11 par l'arrière par exemple à l'aide de vis 60 contre la façade 3.

A ce stade du procédé, le module d'affichage 5 est collé contre la façade 3 et centré grâce aux renfoncements tronconiques 23.

Puis, comme on le voit sur la figure 8B, un outil, comme par exemple un tournevis 62 est passé à travers l'ouverture de passage 25 pour serrer les vis 27 de sorte que chaque tête de vissage 35 appuie contre la partie tronconique 31 du manchon en élastomère 29 pour exercer une force de compression sur ce manchon en élastomère 29 de façon que la partie cylindrique 33 du manchon en élastomère 29 exerce une poussée axiale contre le cadre de support 9 tout en maintenant la partie cylindrique 33 du manchon 29 en appui par frottement par une poussée transversale contre le renfoncement tronconique 23, maintenant ainsi le module d'affichage 7 en appui contre la façade 3.

Ainsi, on met les éléments de liaison 19 en appui d'une part contre le boîtier de fixation 11 et d'autre part contre le cadre de support 9 pour un rattrapage de jeu au moins partiel par l'arrière.

Sur les figures 9A et 9B, une alternative du procédé d'assemblage a été représentée.

Cette alternative se distingue essentiellement par le fait qu'au préalable, le sous-module 43 a été assemblé et collé par un adhésif double face 50 contre la butée de référence 13 qui est ici la face interne de la façade 3.

De plus, les pieds de fixation 21 de l'écran 7 ont chacun été équipés d'un manchon élastique 29 maintenu en place par la vis de fixation 27 comme décrit ci-dessus dans le boitier de fixation.

Puis, on coiffe le module d'affichage 5 avec l'écran 7 depuis l'arrière par le boîtier de fixation 11 et on fixe ce boîtier 11 par l'arrière par exemple à l'aide de vis 60 contre la façade 3.

Puis on procède au vissage des vis 27 ce qui va rapprocher, par le même mécanisme que décrit ci-dessus l'écran 7 du sous-module 43 jusqu'à venir en contact avec l'adhésif double face 50.

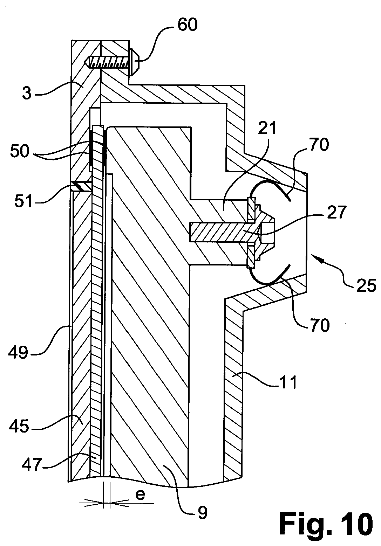

Sur la figure 10 est représentée une alternative des éléments élastiques comprimés 19. En effet, le mode de réalisation de la figure 10 se distingue de celui par exemple de la figure 8B par le fait que l'élément élastique 19 est formé par des lames ressorts 70 courbées, fixées par la vis 27 contre le pied de fixation 21 de l'écran 7. Pour l'assemblage, on peut procéder comme cela été décrit en relation avec les figures 8A et 8B à la différence près qu'en fixant le boîtier de fixation 11 par l'arrière contre la façade 3, on met automatiquement les éléments de liaison 19, c'est-à-dire ici les lames ressort courbées 70, en appui d'une part contre le boitier de fixation 11 et d'autre part contre le cadre de support 9 pour un rattrapage de jeu au moins partiel par l'arrière. Ainsi, un seul vissage est nécessaire pour fixer les lames ressort recourbées 70.

## Revendications

1. Tableau de commande et d'affichage comprenant :
- une façade (3) comportant une ouverture (15)
- un boîtier de fixation (11)
- un module d'affichage (5) comprenant :
- un écran plat (7), et
- un cadre de support (9) dudit écran plat (7), et
un sous-module (43) :
- présentant une plaque de comblement (45) en matériau transparent présentant sensiblement les dimensions de l'ouverture de la façade (15) recevant le module d'affichage (5) en laissant un interstice entre la plaque de comblement (45) et le bord de l'ouverture (15) de la façade,
- comprenant un joint de centrage (51) réalisé en un matériau élastomère thermoplastique polyester pour combler l'interstice entre la plaque de comblement (45) et le bord de l'ouverture (15) de la façade,
- comprenant une dalle tactile (47) collée contre la face (45A) de la plaque de comblement (45) opposée à celle (45B) destinée à être en vis-à-vis d'un utilisateur,
le sous-module (43) étant fixé par collage contre un bord périphérique (9A) du cadre de support (9), le bord périphérique (9A) étant disposé face à une butée de référence (13) d'une face interne de la façade (3), et
l'épaisseur de la plaque de comblement étant choisie de manière qu'elle affleure la face de la façade (3) destinée à être vue par un utilisateur avec un jeu inférieur à 0,2 mm,
le boîtier de fixation (11) étant configuré de manière à fixer par l'arrière le module d'affichage (5) contre la butée de référence (13) de la face interne de la façade (3).

2. Tableau de commande et d'affichage selon la revendication 1, **caractérisé en ce que** le jeu est de 0,15 mm

3. Tableau de commande et d'affichage selon l'une des revendications 1 à 2, **caractérisé en ce que** le joint de centrage présente en coupe transversale un profil en L dont une branche (53) est en contact contre le bord de la plaque de comblement (45) et dont l'autre branche (55) est interposée entre la face interne de façade (13) et le sous-module (43).

4. Tableau de commande et d'affichage selon l'une des revendications 1 à 3, **caractérisé en ce que** le joint de centrage (51) est rectifié.

5. Tableau de commande et d'affichage selon l'une des revendications précédentes **caractérisé en ce que** le sous-module (43) est collé sur le cadre de support (9) de l'écran plat (7) par l'intermédiaire d'un adhésif double face (50) disposé entre le cadre de support (9) et la dalle tactile (47).

6. Tableau de commande et d'affichage selon l'une des revendications 1 à 5, **caractérisé en ce que** la plaque de comblement (45) possède une épaisseur comprise entre 1,6 et 2mm.

7. Tableau de commande et d'affichage selon l'une des revendications 1 à 6, **caractérisé en ce que** la plaque de comblement (45) est en verre.

8. Tableau de commande et d'affichage selon l'une des revendications 1 à 7, **caractérisé en ce que** la plaque de comblement (45) est en polycarbonate.

9. Tableau de commande et d'affichage selon l'une quelconque des revendications 1 à 8, **caractérisé en ce que** le sous-module (43) comprend en outre un film polariseur (49) collé sur la face (45B) de la plaque de comblement (45) destinée à être en vis-à-vis d'un utilisateur.

10. Tableau de commande et d'affichage selon la revendication 9 **caractérisé en ce que** l'épaisseur de la plaque de comblement (45) avec le film polariseur (49) affleure la face de la façade (3) destinée à être vue par un utilisateur avec un jeu inférieur à 0,2 mm, typiquement de 0,15 mm.

## Patentansprüche

1. Steuer- und Anzeigetafel, die enthält:
- eine Fassade (3), die eine Öffnung (15) aufweist,
- ein Befestigungsgehäuse (11),
- ein Anzeigemodul (5), das enthält:
- einen Flachbildschirm (7), und
- einen Tragrahmen (9) des Flachbildschirms (7), und
- ein Teilmodul (43):
- das eine Füllplatte (45) aus transparentem Material aufweist, die im Wesentlichen die Abmessungen der Öffnung der Fassade (15) aufweist, die das Anzeigemodul (5) aufnimmt, indem sie einen Zwischenraum zwischen der Füllplatte (45) und dem Rand der Öffnung (15) der Fassade freilässt,
- das eine Zentrierdichtung (51) enthält, die aus einem thermoplastischen Polyester-Elastomermaterial hergestellt ist, um den Zwischenraum zwischen der Füllplatte (45) und dem Rand der Öffnung (15) der Fassade zu füllen,
- das einen Touchscreen (47) enthält, der gegen die Seite (45A) der Füllplatte (45) geklebt ist, die derjenigen (45B) entgegengesetzt ist, die dazu bestimmt ist, einem Benutzer gegenüberzuliegen,
wobei das Teilmodul (43) durch Kleben gegen einen Umfangsrand (9A) des Tragrahmens (9) befestigt wird, wobei der Umfangsrand (9A) gegenüber einem Bezugsanschlag (13) einer Innenseite der Fassade (3) angeordnet ist, und
die Dicke der Füllplatte so gewählt wird, dass sie gegen die Seite der Fassade (3) bündig anliegt, die dazu bestimmt ist, von einem Benutzer gesehen zu werden, mit einem Spielraum von weniger als 0,2 mm,
wobei das Befestigungsgehäuse (11) so konfiguriert ist, dass das Anzeigemodul (5) von hinten gegen den Bezugsanschlag (13) der Innenseite der Fassade (3) befestigt wird.

2. Steuer- und Anzeigetafel nach Anspruch 1, **dadurch gekennzeichnet, dass** der Spielraum 0,15 mm beträgt.

3. Steuer- und Anzeigetafel nach einem der Ansprüche 1 bis 2, **dadurch gekennzeichnet, dass** die Zentrierdichtung im Querschnitt ein L-förmiges Profil hat, von dem ein Schenkel (53) gegen den Rand der Füllplatte (45) in Kontakt ist und der andere Schenkel (55) zwischen die Innenseite der Fassade (13) und das Teilmodul (43) eingefügt ist.

4. Steuer- und Anzeigetafel nach einem der Ansprüche 1 bis 3, **dadurch gekennzeichnet, dass** die Zentrierdichtung (51) abgeschliffen ist.

5. Steuer- und Anzeigetafel nach einem der vorhergehenden Ansprüche, **dadurch gekennzeichnet, dass** das Teilmodul (43) auf den Tragrahmen (9) des Flachbildschirms (7) mittels eines doppelseitigen Klebebands (50) geklebt wird, das zwischen dem Tragrahmen (9) und dem Touchscreen (47) angeordnet ist.

6. Steuer- und Anzeigetafel nach einem der Ansprüche 1 bis 5, **dadurch gekennzeichnet, dass** die Füllplatte (45) eine Dicke zwischen 1,6 und 2 mm besitzt.

7. Steuer- und Anzeigetafel nach einem der Ansprüche 1 bis 6, **dadurch gekennzeichnet, dass** die Füllplatte (45) aus Glas ist.

8. Steuer- und Anzeigetafel nach einem der Ansprüche 1 bis 7, **dadurch gekennzeichnet, dass** die Füllplatte (45) aus Polycarbonat ist.

9. Steuer- und Anzeigetafel nach einem der Ansprüche 1 bis 8, **dadurch gekennzeichnet, dass** das Teilmodul (43) außerdem eine polarisierende Folie (49) enthält, die auf die Seite (45B) der Füllplatte (45) geklebt ist, die dazu bestimmt ist, einem Benutzer gegenüberzuliegen.

10. Steuer- und Anzeigetafel nach Anspruch 9, **dadurch gekennzeichnet, dass** die Dicke der Füllplatte (45) mit der polarisierenden Folie (49) bündig gegen die Seite der Fassade (3) anliegt, die dazu bestimmt ist, von einem Benutzer gesehen zu werden, mit einem Spielraum von weniger als 0,2 mm, typischerweise von 0,15 mm.

## Claims

1. Control and display panel comprising:
- a front (3) comprising an opening (15)
- a securing housing (11)
- a display module (5) comprising:
- a flat screen (7), and
- a frame (9) for supporting said flat screen (7), and a sub-module (43) :
- having a filler plate (45) made from a transparent material having substantially the dimensions of the opening of the front (15) receiving the display module (5), leaving a gap between the filler plate (45) and the edge of the opening (15) in the front,
- comprising a centring seal (51) produced from a polyester thermoplastic elastomeric material to fill the gap between the filler plate (45) and the edge of the opening (15) in the front,
- comprising a touchscreen (47) adhesively bonded between the face (45A) of the filler plate (45) opposite that (45B) designed to face a user,
the sub-module (43) being secured by adhesive bonding against a peripheral edge (9A) of the support frame (9), the peripheral edge (9A) being arranged such as to face a reference stop (13) of an internal face of the front (3), and
the thickness of the filler plate being chosen such that it is flush with the face of the front (3) designed to be seen by a user with a clearance of less than 0.2 mm,
the securing housing (11) being configured such as to secure, via the rear, the display module (5) against the reference stop (13) of the internal face of the front (3).

2. Control and display panel according to Claim 1, **characterized in that** the clearance is 0.15 mm.

3. Control and display panel according to one of Claims 1 to 2, **characterized in that** the centring seal has, in cross section, an L profile of which a branch (53) is in contact against the edge of the filler plate (45) and of which the other branch (55) is interposed between the internal face of the front (13) and the sub-module (43).

4. Control and display panel according to one of Claims 1 to 3, **characterized in that** the centring seal (51) is rectified.

5. Control and display panel according to one of the preceding claims, **characterized in that** the sub-module (43) is adhesively bonded to the support frame (9) of the flat screen (7) by means of a double-sided adhesive (50) arranged between the support frame (9) and the touchscreen (47).

6. Control and display panel according to one of Claims 1 to 5, **characterized in that** the filler plate (45) has a thickness of between 1.6 and 2 mm.

7. Control and display panel according to one of Claims 1 to 6, **characterized in that** the filler plate (45) is made from glass.

8. Control and display panel according to one of Claims 1 to 7, **characterized in that** the filler plate (45) is made from polycarbonate.

9. Control and display panel according to one of Claims 1 to 8, **characterized in that** the sub-module (43) further comprises a polarizing film (49) adhesively bonded to the face (45B) of the filler plate (45) designed to face a user.

10. Control and display panel according to Claim 9, **characterized in that** the thickness of the filler plate (45) with the polarizing film (49) is flush with the face of the front (3) designed to be seen by a user with a clearance of less than 0.2 mm, typically of 0.15 mm.
